# EUROPEAN PATENT APPLICATION

(11) **EP 2 474 578 A1**
(43) Date of publication of application: **11.07.2012**
(21) Application number: 11250005.3
(22) Date of filing: 06.01.2011
(51) Int. Cl.: C09D 7/04, C09D 167/08

(54) **Antiskinning compositions**

(71) Applicant: Rahu Catalytics Limited, London EC4Y 0DY (GB)
(72) Inventor: The designation of the inventor has not yet been filed
(74) Representative: McNab, Donald C.

(57) **Abstract**

The present invention relates to paint, ink and other coating formulations, particularly alkyd-based formulations comprising metal driers, such as iron- and manganese-containing compounds, which exhibit a reduced propensity to develop a skin on storage.

## Description

### FIELD

The present invention relates to paint, ink and other coating formulations, particularly alkyd-based formulations comprising metal driers, such as iron- and manganese-containing compounds, which exhibit a reduced propensity to develop a skin on storage.

### BACKGROUND

Alkyd resins are a well understood and dominant binder in many oxidatively curable commercial paints and other solvent-based coatings. Alkyd emulsion paints, in which the continuous phase is aqueous, are also widely available commercially. Alkyd resins are produced by the reaction of polyols with carboxylic acids or anhydrides. To make them susceptible to what is commonly referred to as a drying process, some alkyd resins are reacted with unsaturated triglycerides or other source of unsaturation. Plant and vegetable oils, such as linseed oil, are frequently used as the source of triglycerides. In these drying processes, unsaturated alkene groups can react with oxygen from the air, causing the oils to crosslink and harden. This oxidative curing process, although not drying, gives the appearance of drying and is often and herein referred to as such. The length of time required for drying depends on a variety of factors, including the constituents of the alkyd resin and the amount and nature of the solvent - sometimes referred to as the drying oil - employed.

Whilst the autoxidation and polymerisation chemistries that occur during the drying of alkyd-based and other oxidatively curable resins will proceed in the absence of catalysis, it is customary to include in such curable resins small, i.e. catalytic, quantities of optionally organic metal salts, often referred to as metal driers, which catalyze the polymerisation of unsaturated material, so as to form a three-dimensional network.

Typical driers for solvent-based coatings frequently include alkyl carboxylates, typically C₈-C₁₈ carboxylates, of metals such as cobalt, manganese, lead, zirconium, zinc, vanadium, strontium, calcium and iron. Such metal carboxylates are often referred to as metal soaps. Redox-active metals, such as cobalt, manganese, vanadium and Iron, enhance radical formation, and thus the oxidative curing process, whilst so-called secondary driers, such as complexes based on strontium, zirconium and calcium, enhance the action of the redox-active metals. Often these soaps are based on medium-chain alkyl carboxylates such as 2-methyl-hexanoate. The lipophilic units in such soaps enhance the solubility of the drier in solvent-based paints and other coatings.

As well as metal soaps, a variety of metal driers that are redox metal complexes containing organic ligands are used as paint driers, for example manganese compounds comprising 2,2'-bipyridine or 1,10-phenanthroline ligands.

The formation of a skin or lumpy matter is a problem observed in many oilbased (i.e. organic solvent-based) formulations, and in particular in organic solvent-based alkyd resins, as a consequence of oxidation during storage or transportation. Oxidative polymerisation reactions thus lead to the skin formation before application, as well as drying after application. As alluded to above, these polymerisation reactions can be triggered by radicals generated by the action of metal-based driers, for example cobalt-, manganese- or iron-containing driers. In other words, the cause of the skin formation is often associated with the presence of metal driers.

Skin formation during manufacture and storage of air-drying paints and other coatings, in particular of alkyd-based resins, is clearly undesirable. Skin formation can lead to material losses and usage problems, such as surface irregularity after application owing to skin particles remaining in the paint.

Addition of compounds that quench the radicals formed during the storage or transportation processes reduce the skin-forming tendencies of such formulations. Many antiskinning agents are therefore antioxidants. However, addition of such antiskinning antioxidants can also slow the drying desired after application, by reducing the activity of the metal driers.

Oximes, and in particular methylethylketoxime (MEKO), are known to reduce skin formation considerably, particularly with cobalt-based driers. It is understood that the oxime binds to the metal ion during storage of the resin, thereby preventing the metal drier from reacting with oxygen and the substrate for radical formation that otherwise leads to polymerisation and skin formation. Upon application of the paint or other coating as a thin layer on a surface, the MEKO can evaporate, In this way, skinning can be prevented or ameliorated, but the cobalt soap can function, after application, as a polymerisation catalyst (see JH Bieleman in Additives in Plastics and Paints, Chimia, 56, 184 (2002)).

Other antiskinning agents, or ways to address the problem of skinning, other than those involving the use of oximes such as MEKO, have been described. For example, WO 00/11090 describes the use of 1,3-diketones, pyrazoles and imidazoles to reduce the skinning properties; WO 2007/024592 describes the use of isoascorbate as an antiskinning agent and a co-promoter of metal-based driers; and WO 2008/127739 describes the use of hydroxylamine as antiskinning agent. Whilst such additives reduce the tendency towards skinning, they can lead to decreased performance of the metal drier if their degree of incorporation is too great and they do not evaporate sufficiently during the coating (e.g. paint) application.

Whilst cobalt driers have been employed for many years as paint driers, there is a need to develop alternatives, not least since cobalt soaps may need to be registered as Class 2 carcinogenic materials. Iron- and manganese-based paint driers in particular have received considerable attention in recent years in the academic patent literature as alternatives to cobalt-based driers. For example see publications by JH Bieleman in Additives in Plastics and Paints, Chimia, infra; and in Marcomol. Symp., 187, 811 (2002); and R van Gorkum, and E Bouwman, Coord. Chem. Rev., 249, 1709 (2005)). Also many recent patent applications have been published.

WO 03/093384 describes the use of reducing biomolecules in combination with transition-metal salts or complexes based on pyrazoles, aliphatic and aromatic amines, 2,2'-bipyridine, 1,10-phenanthroline and 1,4,7-trimethyl-1,4,7-triazacyctononane. Iron and manganese complexes thereof were preferred.

WO 03/029371 describes the use of (preferably) manganese Schiff base compounds to enhance drying of coatings.

EP 1382648 describes the use of manganese compounds with acetylacetonate and bidentate nitrogen donor ligands for improved paint drying capabilities and antiskinning properties.

WO 2008/003652 claims the use of tetradentate, pentadentate or hexadentate nitrogen ligands bound to manganese and iron as siccative for curing alkyd-based resins, with optionally phenolic-based antioxidants present.

Whilst progress has been made in addressing the problem of skinning by the finding of new antiskinning compounds, these each suffer from the disadvantage that, if their degree of incorporation is too great and/or evaporation of the antiskinning or antioxidant upon applying of the coating does not occur, or does not occur sufficiently, such as for substantially non-volatile phenolic based antioxidants, careful formulation will be essential to avoid drying being too slow. On the other hand, underdosing can lead to enhanced skinning.

### SUMMARY

The present invention is based on the surprising finding that, by contacting an aqueous solution of transition metal ions, such as those provided by iron or manganese salts, and a polydentate accelerant ligand to an oxidatively curable coating formulation, such as an alkyd-based formulation, the resultant formulation shows reduced skinning tendencies as compared with introduction of the metal ions and polydentate accelerant ligand in non-aqueous media, e.g. organic solvents such as propylene glycol or alkane-based solvents, e.g. white spirit.

Viewed from a first aspect, therefore, the invention provides a method comprising contacting an oxidatively curable solvent-based coating composition with an aqueous solution comprising a complex of a transition metal ion and a polydentate accelerant ligand.

Viewed from a second aspect, the invention provides a coating composition obtainable by a method according to the first aspect of the invention.

Viewed from a third aspect, the invention comprises the use of an aqueous solution comprising a complex of a transition metal ion and a polydentate accelerant ligand to reduce skinning of an oxidatively curable solvent-based coating composition.

Other aspects and embodiments of the present invention will be evident from the discussion that follows below.

### DETAILED DESCRIPTION

The present invention is based upon the surprising finding that the introduction of an aqueous solution comprising a complex of a transition metal ion and a polydentate accelerant ligand into an oxidatively curable solvent-based coating composition serves not only to enhance the rate of curing, i.e. drying, of oxidatively curable solvent-based coating compositions, but also reduces the tendency of such coating compositions towards skinning.

The invention has broad utility in relation to a wide variety of solvent-based coating compositions, which term is to be interpreted broadly herein. Examples of coating compositions include clear or coloured varnishes, primary coats, filling pastes, glazes, emulsions and floor coverings, e.g. linoleum floor coverings. Particular embodiments of the invention relate to solvent-based paints and inks, particularly paints such as high-specification paints intended for domestic use.

Use of the term "oxidatively curable solvent-based coating compositions" herein is thus intended to embrace a wide variety of coloured (e.g. by way of pigment or ink) and non-coloured materials, including oils and binders, which form a continuous coating through the course of oxidative reactions, typically to form cross-linkages and other bond formations. Generically, such coating compositions may be characterised by the presence of typically (poly)unsaturated resins that react to form a solid film on a substrate, the resins being initially present in the oxidatively curable solvent-based coating compositions either as liquids, dissolved in an organic solvent or as solids dispersed in a continuous liquid phase. Reaction to form the desired coating upon curing arises from polymerisation reactions initiated by oxidation. Examples of oxidatively curable coating compositions include alkyd-, acrylate-, urethane-, polybutadiene- and epoxy ester-based resins. Typically the curable (e.g. alkyd resin) portion of the curable composition will comprise between about 1 and about 90 9'o by weight of the total weight of the oxidatively curable solvent-based coating composition, e.g. between about 20 and about 70 % by weight of the total weight of the oxidatively curable solvent-based coating composition.

Alkyd resins are a particularly important member of the class of oxidatively curable coating compositions and are a well-studied class of resin to which the present invention may be applied. Hereinafter, particular embodiments of the invention are described with particular reference to the use of alkyd resins, also referred to as alkyd-based resins or alkyd(-based) binders. Whilst these represent particularly significant embodiments of the invention, the invention is not to be considered to be so limited. To be clear: the invention is applicable to a wide range of oxidatively curable coating compositions, typically those comprising at least 1 or 2% by weight of an unsaturated compound (e.g. comprising unsaturated (non-aromatic) double or triple carbon-carbon bonds).

Where percentages by weight are referred to herein (wt % of % w/w), these mean, unless a context clearly dictates to the contrary, percentages by weight with respect to the solid resin resultant from curing, i.e. components of the oxidatively curable solvent-based coating compositions that serve to provide the coating upon curing. With an oxidatively curable alkyd coating composition, therefore, the combined weights of the components of the composition that become, i.e. are incorporated into, the alkyd resin coating, i.e. once cured, are those with respect to which weight percentages herein are based. For example, the composition, either resultant from conducting the method according to the first aspect of the invention, or according to the second aspect of the invention, typically comprises about 0.0001 to about 1 % w/w, e.g. about 0.0005 to about 0.5 % w/w water, or about 0.01 to about 1 % w/w, e.g. about 0.05 to about 0.5 % w/w water, based on the components of the composition that, when cured, from the coating.

Skinning is a problem with oxidatively curable solvent-based compositions. With water-based oxidatively curable compositions, such as alkyd-based emulsion paints, the binder particles (those that form the coating) are embedded within the aqueous matrix, preventing skinning from being a problem. In other words there is a well-recognised technical difference between water-based and solvent-based curable compositions, the present invention relating to the latter.

By oxidatively curable solvent-based compositions is meant herein, consistent with the nomenclature used in the art, compositions that are based on organic (i. e. non-aqueous) solvents. Examples of suitable solvents include aliphatic (including alicyclic and branched) hydrocarbons, such as hexane, heptane, octane, cyclohexane, cycloheptane and isoparaffins; aromatic hydrocarbons such as toluene and xylene; ketones, e.g. methyl ethyl ketone and methyl isobutyl ketone; alcohols, such as isopropyl alcohol, n-butyl alcohol and n-propyl alcohol; glycol monoethers, such as the monoethers of ethylene glycol and diethylene glycol; monoether glycol acetates, such as 2-ethoxyethyl acetate; as well as mixtures thereof. Isomeric variants are included. Thus the term hexane embraces mixtures of hexanes. According to particular embodiments of the invention, the solvent is a hydrocarbyl (i.e. hydrocarbon) solvent, e.g. an aliphatic hydrocarbyl solvent, e.g. solvents comprising mixtures of hydrocarbons. Examples include white spirit and solvents available under the trademarks Shellsol, from Shell Chemicals and Solvesso and Exxsol, from Esso.

The compositions by the invention comprise a transition metal drier, which is a complex of a transition metal ion and a polydentate accelerant ligand. Each of these will now be described.

The transition metal ions used in oxidatively curable coating compositions may be provided by any convenient water-soluble metal salt, for example a vanadium, manganese, iron, cobalt, nickel, copper, cerium or lead salt, more typically vanadium, manganese, iron or cerium salt, or salts comprising mixtures of either of the foregoing lists of metal ions. The valency of the metal may range from +2 to +5. Particular embodiments of the invention comprise manganese-, iron-, and/or vanadium-containing ions. Mixtures of ions may be provided. Where an iron-containing drier is provided, this is usually as an Fe(II) or Fe(III) compound. Where a manganese drier is provided, this is usually as a Mn (II), (III) or (IV) compound; and where a vanadium-containing drier is provided this is usually as a V(II), (III), (IV) or (V) compound.

As is known the facility of the metal drier to catalyse the desired oxidation chemistry of oxidatively curable coating compositions arises from its ability to participate in redox chemistry; the nature of the counteranion is not of great importance. This may serve to provide a readily water-soluble salt such as a chloride, sulfate or acetate. Others counterions are evident to the skilled person.

In order to enhance the activity of the transition metal ions a so-called accelerating compound, herein the "polydentate accelerant ligand", is also included. As the language suggests the term polydentate accelerant ligand is a compound capable of coordinating to the transition metal ion by way of more than one donor site within the ligand and serves to accelerate the drying (curing process) of the oxidatively curable coating composition after application.

According to some embodiments of the invention the polydentate accelerant ligand is a bi-, tri-, tetra-, penta- or hexadentate ligand coordinating through nitrogen and/or oxygen donor atoms. In particular embodiments of the invention the ligand is a bi-, tri-, tetra-, penta- or hexadentate nitrogen donor ligand, in particular a tri-, tetra-, penta-, or hexadentate nitrogen donor ligand. However, the invention is not so limited. Examples of a wide variety of polydentate accelerant ligands are discussed below.

It is to be understood that the transition metal ions and the polydentate accelerant ligand may both be, and in many embodiments of the invention, are provided by a pre-formed transition metal complex of a polydentate accelerant ligand, i.e. one which has been prepared before the aqueous solution (e.g. water) comprising it is prepared. Thus, the aqueous solution according to the first and third aspects of the invention may comprise a pre-formed transition metal drier complex of a polydentate accelerant ligand. Such a solution may be contacted with, e.g. added to, a solvent-based oxidatively curable composition to provide a composition according to the second aspect of the invention. Alternatively, the two components may be provided separately, e.g. with the transition metal ions being provided as a transition metal salt and the polydentate accelerant ligand as such. A complex of the metal ion and the polydentate accelerant ligand can thus form *in situ* in the aqueous solution.

The aqueous solution comprising the transition metal drier, e.g. dissolved in water or an aqueous solution, is typically added to an oxidatively curable coating composition so that the concentration of transition metal ions in the resultant composition are at a concentration, based on the weight of the oxidatively curable coating, of between about 0.0001 wt% and about 0.1 wt%. According to some embodiments, the resultant composition comprises a transition metal ion concentration of between about 0.0005 wt% and about 0.05 wt%, e.g. between about 0.005 wt% and about 0.05 wt%. Typically the component(s) of a complex comprising a transition metal ion and a polydentate accelerant ligand will be dissolved in water such that the amount of the component(s) is about 0.001 wt% to about 1 wt%, with respect to the weight of the water.

The metal drier, as described herein, e.g. as a pre-formed complex of transition metal ion(s) and polydentate accelerant ligand(s)), is typically dissolved in water at a concentration of about 0.001 to about 10 wt%, e.g. about 0.01 to about 5 wt%, or about 0.001 to about 1 wt%, based on the weight of water. Increasing the concentration of the metal drier in the aqueous solution allows a relatively smaller volume of the metal drier-containing aqueous solution to be added to the coating composition. This may be desired by the skilled person. The actual amount of the metal drier depends on the number of metal atoms present in the metal drier molecule and its total molecular weight, as well as the desired degree of its incorporation. For example, if the molecular weight of a desired complex is 560 and contains one iron ion (mw 56) and a level of 0.1% of iron is mentioned, the amount of compound dissolved in water is 1% (w/w) or 10 gram/kg water, If the complex is not preformed but formed *in situ*, a metal salt will also be typically dissolved in water at a concentration of about 0.001 to about 1 wt% based on the metal ion to water ratio. An appropriate amount of polydentate accelerant ligand can then be added to form the desired complex.

After preparation, a solution of the metal drier in water may then be contacted with, e.g. added to, a coating composition.

The resultant composition, comprising the metal drier, and typically from 0.0001 to 1% of water, based on the weight of the oxidatively curable coating, will typically be a solution, i.e. a single homogeneous phase. However, it may also be an emulsion or dispersion, e.g. comprising discontinuous regions of aqueous solution comprising the transition metal drier.

### DRYING CATALYSTS

Often, the metal drier, sometimes referred to as a siccative, is present in the curable liquid composition at a concentration of from about 0.0001 and 0.1 % w/w, more typically from 0.001 and 0.1 % w/w, more typically from 0.002 and 0.05% w/w, even more typically from 0.005 to 0.05 % w/w.

The polydentate accelerant ligand, e.g, a tetradentate, pentadentate or hexadentate nitrogen donor ligand, may be built up within any organic structure which will support coordinating nitrogen atoms. For example one can take a basic tridentate ligand such as 1,4,7-triazacyclononane (TACN), optionally substituted with further nitrogen co-ordinating groups, e.g., -CH₂CH₂-NH₂, -CH₂-Py (Py = pyridyl, typically 2-pyridyl), covalently bound to one or more of the nitrogen atoms within the tridentate ligand (e.g. TACN) or aliphatic groups (e.g. one or more of the ethylene diradicals in TACN).

If present, the iron ions may be selected from Fe(II) and/or Fe(III): manganese ions may be selected from Mn(II), Mn(III), and Mn(IV), or mixtures thereof. According to some embodiments, the transition metal drier comprises the polydentate accelerant ligand and is a mono- or bidentate ligand of one of the foregoing ions, or a mixture thereof.

The polydentate accelerant ligand (L) may be provided, for example, in complexes of one or more of the formulae: [MnLCl₂]; [FeLCl₂]; [FeLCl]Cl; [FeL(H₂O)](PF₈)₂; [FeL]C/₂, [FeLCl]PF₆ and [FeL(H₂O)](BF₄)₂. It will be understood that the counteranions shown in the complexes may equally coordinate to other transition metal ions if desired, e.g. of vanadium or manganese. Other coordinating or noncoordinating counterions include, but are not limited to, bromide, iodide, nitrate, sulfate, formate, acetate, propionate, and hydroxide.

Below are described classes of polydentate accelerant ligand transition metal driers that are iron or manganese complexes of tridentate, tetradentate, pentadentate or hexadentate nitrogen donor ligands.

If unspecified, the length of an alkyl chain is C₁-C₈alkyl and preferably is linear. If unspecified, the length of an alkenyl or alkynyl chain is C₂-C₈ and preferably is linear. If unspecified an aryl group is a phenyl group.

### BISPIDON

The bispidon class are typically in the form of an iron transition metal catalyst.

The bispidon ligand is preferably of the formula: 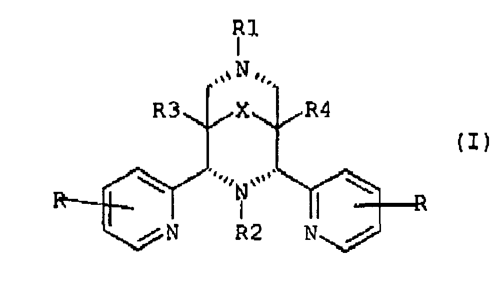 wherein:
each R is independently selected from, hydrogen, F, Cl, Br, hydroxyl, C₁-C₄alkylO-, -NH-CO-H, -NH-CO-C₁-C₄alkyl, -NH₂, -NH-C₁-C₄alkyl, and C₁-C₄alkyl;
R1 and R2 are independently selected from: C₁-C₂₄alkyl, C₈₋₁₀aryl, and a group containing one or two heteroatoms (e.g. N, O or S) capable of coordinating to a transition metal;
R3 and R4 are independently selected from hydrogen, C₁-C₈alkyl, C₁-C₈alkyl-O-C₁-C₈alkyl, C₁-C₈alkyl-O-C₆-C₁₀aryl, C₆-C₁₀aryl, C₁-C₈hydroxyalkyl and -(CH₂)ₙC(O)OR5 wherein R5 is independently selected from: hydrogen, C₁-C₄alkyl, n is from 0 to 4; and
X is selected from C=O, -[C(R6)₂]_{y}- wherein y is from 0 to 3 and each R6 is independently selected from hydrogen, hydroxyl, C₁-C₄alkoxy and C₁-C₄alkyl.
Often R3 = R4 and is selected from -C(O)-O-CH₃, -C(O)-O-CH₂CH₃, -C(O)-O-CH₂C₈H₆ and CH₂OH.

Often the heteroatom capable of coordinating to a transition metal is provided by pyridin-2-ylmethyl optionally substituted by C₁-C₄alkyl or an aliphatic amine optionally substituted by C₁-C₈alkyl.

Often X is C=O or C(OH)₂.

Typical groups for -R1 and -R2 are -CH₃, -C₂H₆, -C₃H₇, -benzyl, -C₄H₈, -C₈H₁₃, -C₈H₁₇, -C₁₂H₂₅, and -C₁₈H₃₇ and -pyridin-2-yl. An example of a class of bispidon is one in which at least one of R1 or R2 is pyridin-2-ylmethyl or benzyl or optionally alkyl-substituted amino-ethyl, e.g. pyridin-2-ylmethyl or *N,N*-dimethylamino-ethyl.

Two examples of bispidons are dimethyl 2,4-di-(2-pyridyl)-3-methyl-7-(pyridin-2-ylmethyl)-3,7-diaza-bicyclo[3.3.1]nonan-9-one-1,5-dicarboxylate (N2py3o-C1) and dimethyl 2,4-di-(2-pyridyl)-3-methyl-7-(N,N-dimethyl-amino-ethyl)-3,7-diaza-bicyclo[3.3.1]nonan-9-one-1,5-dicarboxylate and the corresponding iron complexes thereof. FeN2py3o-C1 may be prepared as described in WO 02/48301. Other examples of bispidons are those which, instead of having a methyl group at the 3-position, have longer alkyl chains (e.g. C₄-C₁₆alkyl or C₈-C₁₆alkyl chains) such as isobutyl, (n-hexyl) C6, (*n*-octyl) C8, (n-dodecyl) C12, (n-tetradecyl) C14, (n-octadecyl) C18; these may be prepared in an analogous manner.

Examples of tetradentate bispidons are described in WO 00/60045 and examples of pentadentate and hexadentate bispidons are described in WO 02/48301, WO 03/104379 and WO 09/010129.

### N4py type

The N4py type ligands are typically in the form of an iron transition metal catalyst.

The N4py type ligands are typically of the formula (II): 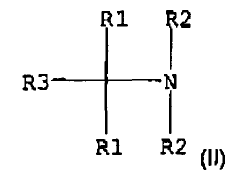 wherein:
each R1 and R2 independently represents -R4-R5;
R3 represents hydrogen, optionally substituted alkyl, aryl or arylalkyl, or-R4-R5,
each R4 independently represents a single bond or an optionally alkyl-substituted alkylene, alkenylene, oxyalkylene, aminoalkylene, alkylene ether, carboxylic ester or carboxylic amide, and
each R5 independently represents an optionally N-alkyl-substituted aminoalkyl group or an optionally alkyl-substituted heteroaryl group such as from pyridinyl, pyrazinyl, pyrazolyl, pyrrolyl, imidazolyl, benzimidazolyl, pyrimidinyl, triazolyl and thiazolyl.

Accordingly to some embodiments R1 or R2 represents pyridin-2-yl: or R2 or R1 represents 2-amino-ethyl, 2-(N-(m)ethyl)amino-ethyl or 2-(N,N-di(m)ethyl)amino-ethyl. If substituted, R5 often represents 3-methyl pyridin-2-yl. R3 preferably represents hydrogen, benzyl or methyl.

Examples of N4Py ligands include N4Py itself (*i.e.* N, N-bis(pyridin-2-yl-methyl)-bis(pyridin-2-yl)methylamine which is described in WO 95/34628); and MeN4py (*i.e.* N,N-bis(pyridin-2-yl-methyl-1,1-bis(pyridin-2-yl)-1-aminoethane) and BzN4py (N,N-bis(pyridin-2-yl-methyl-1,1-bis(pyridin-2-yl)-2-phenyl-1-aminoethane) which are described in EP 0909809.

### TACN-type

The TACN type are typically provided as complexes of manganese ions, e.g. of Mn (III) and/or Mn (IV) ions.

TACN ligands of transition metal driers may be of formula (III): 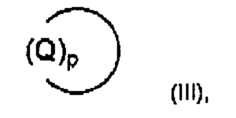 wherein: 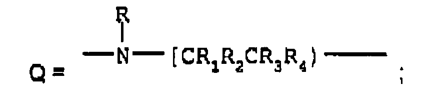
p is 3;
each R is independently selected from: hydrogen, C₁-C₆alkyl, CH₂CH₂OH, and CH₂COOH, or the nitrogen atom of one Q is linked to the nitrogen atom of a Q in another ligand of formula (III) by an ethylene bridge; and
R₁, R₂, R₃, and R₄ are independently selected from: H, C₁-C₄alkyl, and C₁-C₄alkylhydroxy.

Each R is typically a C₁-C₈alkyl, e.g. Me; or two R₅ groups are a C₁₋₆alkyl, e.g. Me, and one R is an ethylene bridge linking the N of Q to which it is attached to the N of another ligand of formula (III). Particular examples of TACN ligands include 1,4,7-trimethyl-1,4,7-triazacyclononane (Me₃-TACN) and 1,2-bis-(4,7-dimethyl-1,4,7-triazacyclonon-1-yl)-ethane (Me₄-DTNE).

### TACN-Nx

The TACN-Nx are preferably in the form of an iron transition metal catalyst.

These ligands are based on a 1,4,7-triazaoyclononane (TACN) structure but have one or more pendent nitrogen groups that serve to complex with the transition metal to provide a tetradentate, pentadentate or hexadentate ligand. According to some embodiments of the TACN-Nx type of ligand, the TACN scaffold has two pendent nitrogen-containing groups that complex with the transition metal (TACN-N₂).

TACN-Nx ligands are typically of the formula (IV): 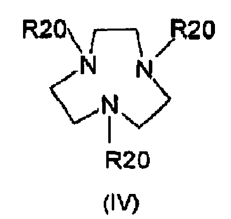 wherein each R20 is independently selected from: an alkyl, cycloalkyl, heterocycloalkyl, heteroaryl, aryl or arylalkyl group optionally substituted with a substituent selected from hydroxy, alkoxy, phenoxy, carboxylate, carboxamide, carboxylic ester, sulfonate, amine, alkylamine and N⁺(R21)₃, wherein R21 is selected from hydrogen, alkyl, alkenyl, arylalkyl, arylalkenyl, oxyalkyl, oxyalkenyl, aminoalkyl, aminoalkenyl, alkyl ether, alkenyl ether, and -CY₂-R22, in which Y is independently selected from H, CH₃, C₂H₅, C₃H₇ and R22 is independently selected from an optionally alkyl-substituted heteroaryl group selected from pyridinyl, pyrazinyl, pyrazolyl, pyrrolyl, imidazolyl, benzimidazolyl, pyrimidinyl, triazolyl and thiazolyl; and wherein at least one of R20 is a -CY₂-R22.

R22 is typically selected from optionally alkyl-substituted pyridin-2-yl, imidazol-4-yl, pyrazol-1-yl, quinolin-2-yl groups. R22 is often either a pyridin-2-yl or a quinolin-2-yl.

### CYCLAM AND CROSS-BRIDGED LIGANDS

The cyclam and cross-bridged ligands are preferably in the form of a manganese transition metal catalyst.

The cyclam ligand is typically of the formula (V): 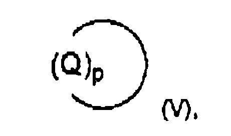 wherein:
Q is independently selected from: 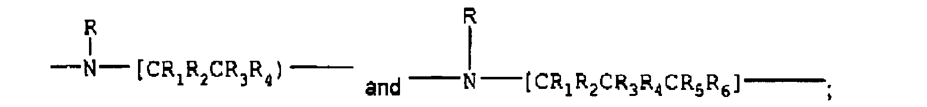
p is 4;
R is independently selected from: hydrogen, C₁-C₈alkyl, CH₂CH₂OH, pyridin-2-ylmethyl, and CH₂COOH, or one of R is linked to the N of another Q via an ethylene bridge; and
R1, R2, R3, R4, R5 and R6 are independently selected from: H, C₁-C₄alkyl, and C₁-C₄alkylhydroxy.

Examples of non-cross-bridged ligands are 1,4,8,11-tetraazacyclotetradecane (cyclam), 1,4,8,11-tetramethyl-1,4,8,11-tetraazacyclotetradecane (Me4cyclam), 1,4,7,10-tetraazacyclododecane (cyclen), 1,4,7,10-tetramethyl-1,4,7,10-tetraazacyclododecane (Me4cyclen), and 1,4,7,10-tetrakis(pyridine-2ylmethyl)-1,4,7,10-tetraazacyclododecane (Py4cyclen). With Py4cyclen the iron complex is preferred.

A preferred cross-bridged ligand is of the formula (VI): 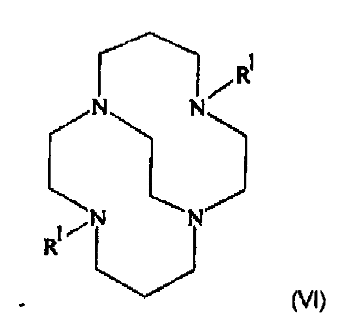 wherein "R¹" is independently selected from H, and linear or branched, substituted or unsubstituted C₁ to C₂₀ alkyl, alkylaryl, alkenyl or alkynyl. All nitrogen atoms in the macropolycyclic rings may be coordinated with a transition metal.

In formula (VI), each R¹ may be the same. Where each R¹ is Me, this provides the ligand 5,12-dimethyl-1,5,8,12-tatraazo-bicyclo[6.6.2]hexadecene (L) of which the complex [Mn(L)Cl₂] may be synthesised according to WO98/39098. Where each R1 = benzyl, this is the ligand 5,12-dibenzyl-1,5,8,12-tetraaza-bicyclo[6.6.2]hexadecane (L') of which the complex [Mn(L')Cl₂] may be synthesised as described in WO 98/39098. Further suitable crossed-bridged ligands are described in WO 98/39098,

### TRISPICEN-type

The trispicens are preferably in the form of an iron transition metal catalyst.

The trispicen type ligands are preferably of the formula (VII):

R17R17N-X-NR17R17 (VII),

wherein:
X is selected from -CH₂CH₂-, -CH₂CH₂CH₂-, -CH₂C(OH)HCH₂-;
each R17 independently represents a group selected from: R17 and alkyl, cycloalkyl, heterocycloalkyl, heteroaryl, aryl and arylalkyl groups optionally substituted with a substituent selected from hydroxy, alkoxy, phenoxy, carboxylate, carboxamide, carboxylic ester, sulfonate, amine, alkylamine and N⁺(R19)₃, wherein R19 is selected from hydrogen, alkyl, alkenyl, arylalkyl, arylalkenyl, oxyalkyl, oxyalkenyl, aminoalkyl, aminoalkenyl, alkyl ether, alkenyl ether, and -CY₂-R18, in which each Y is independently selected from H, CH₃, C₂H₆, C₃H₇ and R18 is independently selected from an optionally substituted heteroaryl group selected from pyridinyl, pyrazinyl, pyrazolyl, pyrrolyl, imidazolyl, benzimidazolyl, pyrimidinyl, triazolyl and thiazolyl; and
at least two of R 17 are -CY₂-R18.

The heteroatom donor group is preferably pyridinyl, e.g. 2-pyridinyl, optionally substituted by -C₁-C₄-alkyl.

Other preferred heteroatom donor groups are imidazol-2-yl, 1-methyl-imidazol-2-yl, 4-methyl-imidazol-2-yl, imidazol-4-yl, 2-methyl-imidazol-4-yl, 1-methyl-imidazol-4-yl, benzimidazol-2-yl and 1-methyl-benzimidazol-2-yl.

Preferably three of R17 are CY₂-R18.

The ligand Tpen (N, N, N', N'-tetra(pyridin-2-yl-methyl)ethylenediamine) is disclosed in WO 97/48787. Other suitable trispicens are described in WO 02/077145 and EP 1001009A.

Preferably, the ligand is selected from dimethyl 2,4-di-(2-pyridyl)-3-methyl-7-(pyridin-2-ylmethyl)-3,7-diaza-bicyclo[3.3.1]nonan-6-one-1,5-dicarboxylate, dimethyl 2,4-di-(2-pyridyl)-3-methyl-7-(N,N-dimethyl-amino-ethyl)-3,7-diaza-bicyclo[3.3.1]nonan-9-one-1,5-dicarboxylate, 5,12-dimethyl-1,5,8,12-tetraaza-bicyclo[6.6.2]hexadecane, 5,12-dibenzyl-1,5,8,12-tetraaza-bicyclo[6.6.2]hexadecane, N,N-bis(pyridin-2-yl-methyl-1,1-bis(pyridin-2-yl)-1-aminoethane, and N,N-bis(pyridin-2-yl-methyl-1,1-bis(pyridin-2-yl)-2-phenyl-1- minoethane.

### Other ligands

Other polydentate accelerant ligands known to those in the art may also be used, and these are discussed below. Typically these ligands may be used in pre-formed transition metal complexes, which comprise the polydentate accelerant ligand.

Firstly the polydentate accelerant ligand may be a bidentate nitrogen donor ligand, such as 2,2'-bipyridine or 1,10-phenanthroline, both of which are used known in the art as polydentate accelerant ligands in siccative metal driers. Often 2,2'-bipyridine or 1,10-phenanthroline are provided as ligands in manganese- or iron-containing complexes. Other bidentate polydentate accelerant ligands include bidentate amine-containing ligands. 2-aminomethylpyridine, ethylenediamine, tetramethylethylenediamine, diaminopropane, and 1,2-diaminocyclohexane.

A variety of bi- to hexadentate oxygen donor-containing ligands, including mixed oxygen- and nitrogen-containing donor ligands, are also known. For example, WO 03/029371 A1 describes tetradentate diimines of the formula:

R₁-C(A₁-O)=N-R₂-N=C(A₂-O)-R₃

wherein:
A1 and A2 both are aromatic residues;
R1 and R3 are covalently bonded groups, for example hydrogen or an organic group; and
R2 is a divalent organic radical.

The use of 1,3-diketanes as polydentate accelerant ligands is described in both EP 1382648 A1 and WO 00/11090 A1, EP 1382648 also describing the use of complexes comprising 1,3-diketones (or 1,3-diimines) and bidentate diamines, including bipyridine and phenanthroline.

A variety of metal driers are described in US 2005/0245639, including vanadium, manganese, iron, cobalt, cerium and lead complexes, including those containing imidazoles and pyrazoles such as those described in WO 00/11090, and aromatic and aliphatic amines.

Of the non-bispidon type siccatives the following are most preferred:

5,12-dimethyl-1,5,8,12-tetraaza-bicyclo[6.6.2]hexadecane, 6,12-dibenzyl-1,5,8,12-tetraaza-bicyclo[6.6.2]hexadecane, 1,4,8,11-tetraazacyclotetradecane, 1,4,8,11-tetramethyl-1,4,8,11-tetraazacyclotetradecane, 1,4,7,10-tetraazacyclododecane, 1,4,7,10-tetramethyl-1,4,7,10-tetraazacyclododecane, and 1,4,7,10-tetrakis(pyridine-2ylmethyl)-1,4,7,10-tetraazacyclododecane, N,N-bis(pyridin-2-yl-methyl)-bis(pyridin-2-yl)methylamine, N,N-bis(pyridin-2-yl-methyl-1,1-bis(pyridin-2-yl)-1-aminoethane, N,N-bis(pyridin-2-yl-methyl-1,1-bis(pyridin-2-yl)-2-phenyl-1-aminoethane and 1,4,7-trimethyl-1,4,7-triazacyclononane.

According to embodiments of the present invention, the oxidatively curable solvent-based coating agent compositions of the invention may contain an antiskinning compound or antioxidant. This may be added to curable composition before, after or at the same time as addition of the aqueous solution of the metal drier. Examples include, but are not limited to, methylethylketaxime, acetonoxime, butyraldoxime, dialkylhydroxylamine, ascorbic acid, isoascorbate materials as described in WO 2007/024582. acetylacetonate, ammonia, vitamin E (tocopherol), hydroxylamine, triethylamine, dimethylethanolamine, o-cyclohexylphenol, p-cyclohexylphenol and 2-t-butyl-4-methylphenol. In some embodiments, where an antiskinning compound is present this is methylethylketoxime, acetonoxime, butyraldoxime, dialkylhydroxylamine, ammonia, hydroxylamine, triethylamine, dimethylethanolamine, o-eyelchexylphenol, p-cyclohoxylphanol, 2-t-butyl-4-methylphenol, or a mixture thereof.

Where present, the concentration of antioxidant or antiskinning compound applied is preferably between about 0.001 and about 2 wt%.

Additionally, one or more auxiliary driers (sometimes referred to as secondary driers) may be present in the curable composition. Any such auxiliary driers may be added to the curable composition before, after or at the same time as addition of the aqueous solution of the metal drier and/or antiskinning compound or antioxidant. These may include fatty acid soaps of zirconium, bismuth, barium, vanadium, cerium, calcium, lithium, strontium, and zinc. Preferred fatty acid soaps are octaoates, optionally alkyl-substituted hexanoates and naphthanoates. Preferred metal ions in these soaps are zirconium, calcium, strontium and barium. Often such auxiliary driers advantageously diminish the effect of adsorption of the main metal drier on any solid particles often present in the curable composition. Other non-metal based auxiliary driers may also be present if desired. These may include, for example, thiol compounds, as described in US 2001100089322 A or biomolecules as described in US 2005/0245639 A. Typical concentrations of these auxiliary dryers are between about 0.01 wt% and about 2.5 wt%.

The coating composition may furthermore contain one or more additives conventionally found in curable coating compositions, such as, but not limited to: UV stabilisers, dispersants, surfactants, inhibitors, fillers, antistatic agents, flame-retardants, lubricants, antifoaming agents, antifouling agents, bactericides, fungicides, algaecides, insecticides, extenders, plasticisers, antifreezing agents, waxes and thickeners.

The curable coating Composition according to the various aspects of the invention may be used as a decorative coating, e.g. applied to wood substrates, such as door or window frames, or for other substrates such as those made of synthetic materials (such as plastics including elastomeric materials), concrete, leather, textile, glass, ceramic or metal. Thus the invention also provides a method comprising applying to a substrate a composition according to the second aspect, or obtainable according to the first or third aspects, to a substrate. The thus applied composition may then be allowed to cure. The invention also provides a composition according to the second aspect, or obtainable according to the first or third aspects, when cured.

Each and every patent and non-patent document referred to herein is incorporated by reference as if the entire content of each document were recited herein in its entirety.

The invention may be further understood with reference to the following non-limiting clauses:
1. A method comprising contacting an oxidatively curable solvent-based coating composition with an aqueous solution comprising a complex of a transition metal ion and a polydentate accelerant ligand.
2. The method of clause 1, wherein the aqueous solution comprises about 0.001 to about 10% by weight of the complex, based on the weight of water in the aqueous solution.
3. The method of clause 1 or clause 2, wherein the coating composition is an alkyd-based coating composition.
4. The method of any one of clauses 1 to 3, wherein the coating composition is a paint.
5. The method of any one of clauses 1 to 4, wherein the solvent is a hydrocarbyl solvent.
6. The method of any one of clauses 1 to 5, wherein the complex is pre-formed.
7. The method of any one of clauses 1 to 6, wherein the complex is an iron, manganese, or vanadium complex
8. The method of clause 7 wherein the complex is an Fe(II) or Fe(III) complex; an Mn(II), (III) or (IV) complex; or a V(II), (III), (IV) or (V) complex.
9. The method of clause 7 or clause 8, wherein the complex is an iron or manganese complex.
10. The method of any one of clauses 1 to 9. wherein the polydentate accelerant ligand is a bi-, tri-, tetra-, penta- or hexadentate ligand coordinating through nitrogen and/or oxygen donor atoms.
11. The method of any one of clauses 1 to 9, wherein the polydentate accelerant ligand is a bi-, tri-, tetra-, penta- or hexadentate nitrogen donor ligand
12. The method of any one of clauses 1 to 9, wherein the polydentate accelerant ligand is a tri-, tetra-, penta-, or hexadentate nitrogen donor ligand.
13. The method of any one of clauses 1 to 9, wherein the polydentate accelerant ligand is selected from the group consisting of ligands of formulae (I) to (VII): 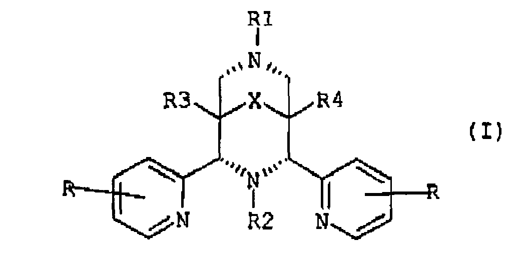 (wherein:
   each R to independently selected from: hydrogen, F, Cl, Br, hydroxyl, C₁-C₄alkylO-, -NH-CO-H, -NH-CO-C₁C₄alkyl, -NH_{2,} -NH-C₁-C₄alkyl, and C₁-C₄alkyl;
   R1 and R2 are independently selected from: C₁-C₂₄alkyl, C₅₋₁₀aryl, and a group containing one or two heteroatoms capable of coordinating to a transition metal;
   R3 and R4 are independently selected from hydrogen, C₁-C₈alkyl, C₁-C₈alkyl-O-C₁-C₆alkyl, C₁,-Cₐalkyl-O-C₆-C₁₀aryl, C₆-C₁₀aryl, C₁-C₈hydroxyalkyl and -(CH₂)ₙC(O)ORS wherein R5 is independently selected from; hydrogen, C₁-C₄alkyl, n is from O to 4; and
   X is selected from C=O, -[C(R6)₂]_{y}- wherein y is from 0 to 3 and each R6 is independently selected from hydrogen, hydroxyl, C₁-C₄alkoxy and C₁-C₄alkyl); 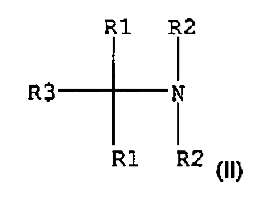
   (wherein:
   each R1 and R2 independently represents-R4-R6;
   R3 represents hydrogen, optionally substituted alkyl, aryl or arylalkyl, or -R4-R5,
   each R4 independently represents a single bond or an optionally alkyl-substituted alkylene, alkenylene, oxyalkylene, aminoalkylene, alkylene ether, carboxylic ester or carboxylic amide, and
   each R5 independently represents an optionally N-alkyl-substituted aminoalkyl group or an optionally alkyl-substituted heteroaryl group such as from pyridinyl, pyrazinyl, pyrazolyl, pyrrolyl, imidazolyl, benzimidazolyl, pyrimidinyl, triazolyl and thiazolyl); 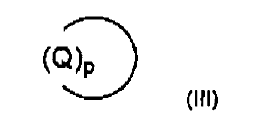
   (wherein: 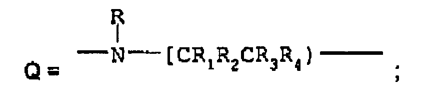
   p is 3;
   each R is independently selected from: hydrogen, C₁-C₆alkyl, CH₂CH₂OH, and CH₂COOH, or the nitrogen atom of one Q is linked to the nitrogen atom of a Q in another ligand of formula (III) by an ethylene bridge; and
   R₁, R₂, R₃, and R₄ are independently selected from: H, C₁-C₄alkyl, and C₁-C₄alkylhydroxy); 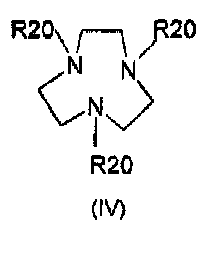
   (wherein each R20 is independently selected from: an alkyl, cycloalkyl, heterocycloalkyl, heteroaryl, aryl or arylalkyl group optionally substituted with a substituent selected from hydroxy, alkoxy, phenoxy, carboxylate, carboxamide, carboxylic ester, sulfonate, amine, alkylamine and N⁺(R21)₃, wherein R21 is selected from hydrogen, alkyl, alkenyl, arylalkyl, arylalkenyl, oxyalkyl, oxyalkenyl, aminoalkyl, aminoalkenyl, alkyl ether, alkenyl ether, and -CY₂-R22, in which Y is independently selected from H, CH₃, C₂H₅, C₃H₇ and R22 is independently selected from an optionally alkyl-substituted heteroaryl group selected from pyridinyl, pyrazinyl, pyrazolyl, pyrrolyl, imidazolyl, benzimidazolyl, pyrimidinyl, triazolyl and thiazolyl; and wherein at least one of R20 is a -CY₂-R22); 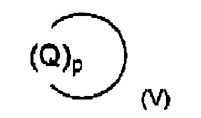 (wherein:
   Q is independently selected from: 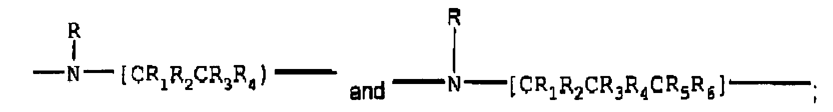
   p is 4;
   R is independently selected from: hydrogen, C₁-C₆alkyl, CH₂CH₂OH, pyridin-2-ylmethyl, and CH₂COOH, or one of R is linked to the N of another Q via an ethylene bridge; and
   R1, R2. R3, R4, R6 and R6 are independently selected from: H, C₁-C₄alkyl, and C₁,C₄alkylhydroxy); 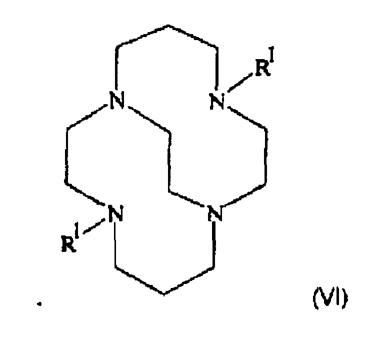
   (wherein "R'" is independently selected from H, and linear or branched, substituted or unsubstituted C₁ to C₂₀ alkyl, alkylaryl, alkenyl or alkynyl); and

   R17R17N-X-NR17R17 (VII)

   (wherein:
   X is selected from -CH₂CH₂-, -CH₂CH₂CH₂-, -CH₂C(OH)HCH₂-;
   each R17 independently represents a group selected from: R17 and alkyl, cycloalkyl, heterocycloalkyl, heteroaryl, aryl and arylalkyl groups optionally substituted with a substituent selected from hydroxy, alkoxy, phenoxy, carboxylate, carboxamide, carboxylic ester, sulfonate, amine, alkylamine and N*(R19)ₐ, wherein R19 is selected from hydrogen, alkyl, alkenyl, arylalkyl, arylalkenyl, oxyalkyl, oxyalkenyl, aminoalkyl, aminoalkenyl, alkyl ether, alkenyl ether, and -CY₂-R18, in which each Y is independently selected from H, CH₃, C₂H_{5,} C₃H₇, and R18 is independently selected from an optionally substituted heteroaryl group selected from pyridinyl, pyrazinyl, pyrazolyl, pyrrolyl, imidazolyl, benzimidazolyl, pyrimidinyl, triazolyl and thiazolyl; and
   at least two of R17 are -CY₂-R18).
14. The method of clause 13, wherein the polydentate accelerant ligand is of formula (I).
15. The method of clause 14, wherein the group capable of coordinating to a transition metal is pyridin-2-yl, optionally substituted by -C₁-C₄alkyl,
16. The method of clause 14, wherein the group capable of coordinating to a transition metal is unsubstituted pyridinyl.
17. The method of clause 14, wherein the group capable of coordinating to a transition metal is an aliphatic amine, optionally substituted by -C₁-C₆alkyl.
18. The method of any one of clauses 14 to 17, wherein X is C=O or C(OH)₂.
19. The method of any one of clauses 14 to 18, wherein -R3 = -R4 and is selected from -C(O)-O-CH₃, -C(O)-O-CH₂CH₃, -C(O)-O-CH₂C₆H5 and -CH₂OH.
20. The method of any one of clauses 14 to 19, wherein one of R1 or R2 is selected from pyridin-2-ylmethyl and optionally alkyl-substituted aminoethyl and the other of R1 or R2 is selected from CH₃, C₂H₅, C₃H₇. C₄H₉, C₆H₁₃, C₈H₁₇, C₁₂H₂₅, and C₁₈H₃₇.
21. The method of clause 13, wherein the ligand is selected from dimethyl 2,4-di-(2-pyridyl)-3-methyl-7-(pyridin-2-ylmethyl)-3,7-diaza-bicyclo[3.3.1]nonan-9-one-1,5-dicarboxylate, dimethyl 2,4-di-(2-pyridyl)-3-methyl-7-(N,N-dimethyl-amina-ethyl)-3,7-diaza-bicyclo[3.3.1]nonan-9-one-1,5-dicarboxylate, 5,12-dimethyl-1,5,8,12-tetraaza-bicyclo[6.6.2]hexadecane, 5,12-dibenzyl-1,5,8,12-tetraaza-bicyclo[6.6.2]hexadecane, 1,4,8,11-tetraazacyclotetradecane, 1,4,8,11-tetramethyl-1,4,8,11-tetraazacyclotetradecane, 1,4,7,10-tetraazacyclododecane, 1,4,7,10-tetramethyl-1,4,7,10-tetraazacyclododecane, and 1,4,7,10-tetrakis(pyridine-2ylmethyl)-1,4,7,10-tetraazacyctododecane, N,N-bis(pyridin-2-yl-methyl)-bis(pyridin-2-yl)methylamine, 1,4,7-trimethyl-1,4,7-triazacyclononane, N,N-bis(pyridin-2-yl-methyl-1,1-bis(pyridin-2-yl)-1-aminoethane. and N,N-bis(pyridin-2-yl-methyl-1,1-bis(pyridin-2-yl)-2-phenyl-1-aminoethane.
22. The method of clause 21, wherein the ligand is selected from dimethyl 2,4-di-(2-pyridyl)-3-methyl-7-(pyridin-2-ylmethyl)-3,7-diaza-bicyclo[3.3.1]nonan-9-one-1,5-dicarboxylate, dimethyl 2,4-di-(2-pyridyl)-3-methyl-7-(N,N-dimethyl-amino-ethyl)-3,7-diaza-bicyclo[3.3.1]nonan-9-one-1,5-dicarboxylate, 5,12-dimethyl-1,5,8,12-tetraaza-bicyclo[6.8.2]hexadecane, 5,12-dibenzyl-1,5,8,12-tetraaza-bicyclo[6.6.2]hexadecane, N,N-bis(pyridin-2-yl-methyl-1,1-bis(pyridin-2-yl)- 1-aminoethane, and N,N-bis(pyridin-2-yl-methyl-1,1-bis(pyridin-2-yl)-2-phenyl-1- minoethane.
23. The method of any one of clauses 1 to 22, wherein the concentration of the complex in the resultant composition is present at between about 0.0005 and about 0.05 wt%, based on the weight of the oxidatively curable coating.
24. The method of any one of clauses 1 to 23, which further comprises contacting the coating composition with an antiskinning agent.
25. The method of clause 24, wherein the antiskinning agent is selected from methylethylketoxime, acetonoxime, butyraldoxime, dialkylhydroxylamine, ammonia, hydroxylamine, triethylamine, dimethylethanolamine, o-cyclohexylphanol, p-cyclohexylphenol and 2-t-butyl-4-mothylphenal.
26. The method of clause 24 or clause 25, wherein the antiskinning agent is present at a concentration of between about 0,001 and about 2 wt%, based on the weight of the oxidatively curable coating.
27. The method of any of clauses 1 to 28, which further comprises contacting the coating composition with between about 0.01 and about 2.5 wt%, based on the weight of the oxidatively curable coating, of an auxiliary drier selected from a zirconium, bismuth, barium, vanadium, cerium, calcium, lithium, strontium or zinc salt.
28. The method of clause 27, wherein the auxiliary drier Is selected from a zirconium, calcium, strontium or barium salt.
29. The method of clauses 27 or clause 28, wherein the auxiliary drier is a fatty acid soaps selected from octanoate, optionally substituted hexanoate and naphthanoate.
30. A coating composition obtainable by a method as defined in any one of clauses 1 to 29.
31. The coating composition of clause 30, which comprises from about 0.01 to about 1 wt% of water, based on the weight of the oxidatively curable coating.
32. Use of an aqueous solution comprising a complex of a transition metal ion and a polydentate accelerant ligand to reduce skinning of an oxidatively curable solvent-based coating composition.

The following non-limiting examples will more fully illustrate the embodiments of this invention.

### EXPERIMENTAL

Dimethyl 2,4-di-(2-pyridyl)-3-methyl-7-(pyridin-2-ylmethyl)-3,7-diaza-bicyclo[3.3.1]nonan-9-one-1,5-dicarboxylate (N2py3o-C1) and the iron(II) complex thereof [Fe(N2py3o-C1)Cl]Cl was prepared as described in WO 02/48301.

Solutions of 1% (w/w) solution of (Fe(N2py3o-C1)Cl]Cl in 1,2-propane-diol and water were prepared; the experiments with 1,2-propane-diol were the reference experiments.

MEKO (methylethylketoxime - Borchl NOX55 was supplied by OMG Borchers GmbH. Langenfeld Germany.

The auxiliary driers used were Octa-Soligen Calcium 10- basic (0.6%), and Octe-Soligen Zirconium 12 (0.6%).

### Formulation 1

To 300 g of WorleKyd SD 7003 (85% in low aromatic white spirit: boiling range 160-200 °C; ex Worlee), 2.5 g of Disperbyk 107 (ex Byk) and 300 g of Kronos 2310 (ex Kronos), 2.5 g of the 1% aqueous solution containing [Fe(N2py3a-C1)Cl]Cl was added under stirring for 30 min (300 rpm). Then another batch of 255 g of WorleKyd SD 7003 was added, as well as 110.5 g of a low aromatic white spirit boiling range of 160-200 °C, 10 g of WorleeAdd 373N (Worlee) and 10 g of MEKO (Borchi NOX55) were added. The reference experiment was conducted in the same way, expect for the addition of 2.5 g of the 1% 1,2-propane-diol solution containing [Fe(N2py3o-C1)Cl]Cl.

After one day of settling, the drying time was determined after application of a thin layer of paint (100 µm) (23°C, 55% RH). Three levels of drying were determined: set, surface drying, through drying. To measure the drying time, a drying recorder was used (BK-3 recorder) Drying recorder), according to ASTM D5896,

Three levels of drying are defined:
1. Set-dry; the needle gives a continuous penetration of the film (a line is visible), the paint begins to polymerize.
2. Surface dry: the needle still penetrates the film, but shows an interrupted track.
3. Through-dry: no lines are visible on the film.

The storage stability tests were conducted at room temperature and 40 °C in closed jars. Skinning on the surface of the paint formulation was determined after storage for one month.

### Formulation 2

A mixture of 230 g of Bosig-Kyd L 1878 85-140E (ex Bosig), 12 g of BorchiGen ND (ex OMG Borchers GmbH, Langenfeld Germany), 280 g of TiO2 2310 (ex Kronos), 150 g of Blanc Fixe Micro (ex Sachtleben), 2g of Aerosil R972 (ex Degussa), 4.5 of Luvothix HT (ex Lehmann & Voss) was prepared. To this mixture 2.5 g of the 1% aqueous solution containing [Fe(N2py3o-C1)Cl]Cl was added under stirring for 30 min (300 rpm). Then another batch of 200 g of Bosig-Kyd L 1878 85-140E (ex Bosig) together with 93 g of low aromatic white spirit boiling range 160-200 °C was added.

The reference experiment was conducted in the same way, expect for the addition of 2.5 g of the 1% 1,2-propane-diol solution containing [Fe(N2py3o-C1)Cl]Cl.

After one day of settling, the drying time was determined after application of a thin layer of paint (100 µm) (23°C, 55% RH). Three levels of drying were determined: set, surface drying, through drying (see under Formulation 1 for details).

The storage stability tests were conducted at room temperature and 40°C in closed jars, Skinning on the surface of the paint formulation was determined after storage for one month.

**Table 1. Drying time and skinning behaviour determined for (Fe(N2py3o-C1)Cl]Cl dissolved in water vs 1,2-propane-dial (PG) in paint Formulation 1.**

| | **Set drying time** | **Surface drying time** | **Through drying time** | **Skin after 1 month at ambient T** | **Skin after 1 month at 40 °C** |
|---|---|---|---|---|---|
| [Fe(N2py3o-C1)Cl]Cl in water | 1 | 1.5 | 3 | No | No |
| [Fe(N2py30-C1)Cl]Cl in PG | 1 | 1.25 | 3.25 | Yes | No |

**Table 2. Drying time and skinning behaviour determined for [Fe(N2py30-C1)Cl]Cl dissolved In water vs 1,2-propane-diol(PG) in paint Formulation 2.**

| | **Set drying time** | **Surface drying time** | **Through drying time** | **Skin after 1 month as ambient T** | **skin after 1 month at 40°C** |
|---|---|---|---|---|---|
| [Fe(N2py3o-C1)Cl]Cl in water | 1.5 | 6.5 | 14.5 | No | No |
| [Fe(N2py3o-C1)Cl]Cl in PG | 2 | 4 | 12.0 | No | Yes |

The results shown in Tables 1 and 2 show that, whilst the drying times of the formulations of [Fe(N2py3o-C1)Cl]Cl In water vs 1,2-propane-diol are quite similar, in none of the cases where [Fe(N2py30-C1)Cl]Cl in water has been added, no sign of skinning was noted after one month of storage has been noted. These experiments show that there are clear benefits of dissolving [Fe(N2py3o-C1)Cl]Cl in water and add this solution to the alkyd-based formulations.

## Claims

1. A method comprising contacting an oxidatively curable solvent-based coating composition with an aqueous solution comprising a complex of a transition metal ion and a polydentate accelerant ligand.

2. The method of claim 1, wherein the aqueous solution comprises about 0.001 to about 10% by weight of the complex, based on the weight of water in the aqueous solution.

3. The method of claim 1 or claim 2, wherein the coating composition is an alkyd-based coating composition.

4. The method of any one of claims 1 to 3, wherein the coating composition is a paint.

5. The method of any one of claims 1 to 4, wherein the complex is pre-formed.

6. The method of any one of claims 1 to 5, wherein the complex is an Fe(II) or Fe(III) complex or an Mn(II), (III) or (IV) complex.

7. The method of any one of claims 1 to 6, wherein the polydentate accelerant ligand is a bi-, tri-, tetra-, penta- or hexadentate ligand coordinating through nitrogen and/or oxygen donor atoms.

8. The method of any one of claims 1 to 9, wherein the polydentate accelerant ligand is selected from the group consisting of ligands of formulae (I) to (VII): 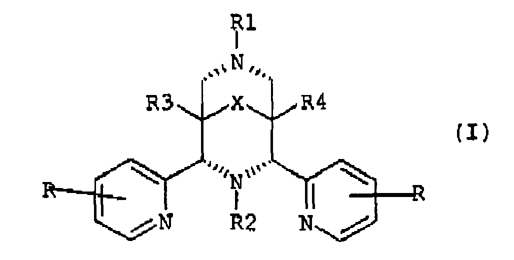 (wherein:
each R is independently selected from: hydrogen, F, Cl, Br, hydroxyl, C₁-C₄alkylO-, -NH-CO-H, -NH-CO-C₁-C₄alkyl, -NH₂, -NH-C₁-C₄alkyl, and C₁-C₄alkyl;
R1 and R2 are independently selected from: C₁-C₂₄alkyl, C₆-₁₀aryl, and a group containing one or two heteroatoms capable of coordinating to a transition metal;
R3 and R4 are independently selected from hydrogen, C₁-C₈alkyl, C₁-C₈alkyl-O-C₁-C₈alkyl, C₁-C₈alkyl-O-C₈-C₁₀aryl, C₆-C₁₀)aryl, C₁-C₈hydroxyalkyl and -(CH₂)ₙC(O)OR5 wherein R5 is independently selected from: hydrogen, C₁₋C₄alkyl, n is from 0 to 4; and
X is selected from C=O, -[C(R6)₂]_{y}- wherein y is from 0 to 3 and each R6 is independently selected from hydrogen, hydroxyl, C₁-C₄alkoxy and C₁-C₄alkyl); 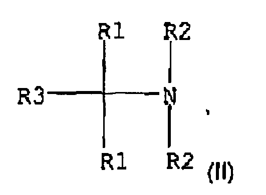
(wherein:
each R1 and R2 independently represents -R4-RS;
R3 represents hydrogen, optionally substituted alkyl, aryl or arylalkyl, or -R4-R5,
each R4 independently represents a single bond or an optionally alkyl-substituted alkylene, alkenylene, oxyalkylene, aminoalkylene, alkylene etfler, carboxylic ester or carboxylic amide, and
each R5 independently represents an optionally N-alkyl-substltuted aminoalkyl group or an optionally alkyl-substituted heteroaryl group such as from pyridinyl, pyrazinyl, pyrazolyl, pyrrofyl, imidazolyl, benzimidazolyl, pyrimidinyl, triazolyl and thiazolyl); 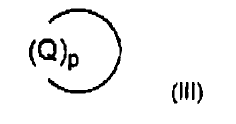
(wherein: 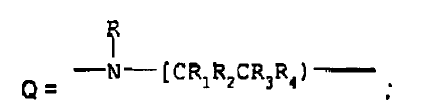
p is 3;
each R is Independently selected from: hydrogen, C₁-C₆alkyl, CH₂CH₂OH, and CH₂COOH, or the nitrogen atom of one Q is linked to the nitrogen atom of a Q in another ligand of formula (III) by an ethylene bridge; and
R₁, R₂, R₃, and R₄ are independently selected from: H, C₁-C₄alkyl, and C₁-C₄alkylhydroxy); 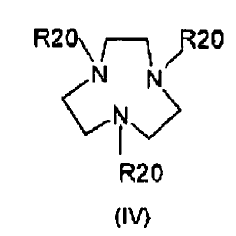
(wherein each R20 is independently selected from: an alkyl, cycloalkyl, heterocycloalkyl, heteroaryl, aryl or arylalkyl group optionally substituted with a substituent selected from hydroxy, alkoxy, phenoxy, carboxylate, carboxamide, carboxylic ester, sulfonate, amine, alkylamine and N⁺(R21)₃, wherein R21 is selected from hydrogen, alkyl, alkenyl, arylalkyl, arylalkenyl, oxyalkyl, oxyalkenyl, aminoalkyl, aminoalkenyl, alkyl ether, alkenyl ether, and -CY₂-R22, in which Y is independently selected from H, CHs. C₂H_{O}, C₃H₇ and R22 is independently selected from an optionally alkyl-substituted heteroaryl group selected from pyridinyl, pyrazinyl, pyrazolyl, pyrrolyl, imidazolyl, benzimidazolyl, pyrimidinyl, triazolyl and thiszalyl; and wherein at least one of R20 is a -CY₂-R22); 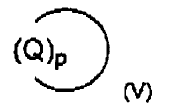 (wherein:
Q is independently selected from: 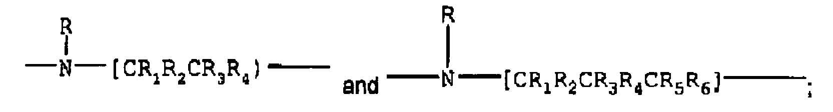
p is 4;
R is independently selected from: hydrogen. C₁,-C₆alkyl, CH₂CH₂OH, pyridin-2-ylmethyl, and CH₂COOH, or one of R is linked to the N of another Q via an ethylene bridge; and
R1, R2, R3, R4, R5 and R6 are independently selected from: H, C₁-C₄alkyl, and C₁-C₄alkylhydroxy); 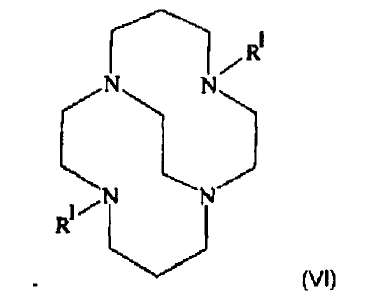
(wherein "R'" is independently selected from H, and linear or branched, substituted or unsubstituted C₁ to C₂₀ alkyl, alkylaryl, alkenyl or alkynyl); and
R17R17N-X-NR17R17 (VII)
(wherein:
X is selected from -CH₂CH₂-, -CH₂CH₂CH₂-, -CH₂C(OH)HCH₂-;
each R17 independently represents a group selected from: R17 and alkyl, cycloalkyl, heterocycloalkyl, heteroaryl, aryl and arylalkyl groups optionally substituted with a substituent selected from hydroxy, alkoxy, phenoxy, carboxylate, carboxamide, carboxylic ester, sulfonate, amine, alkylamine and N⁺(Rl9)₃, wherein R19 is selected from hydrogen, alkyl, alkenyl, arylalkyl, arylalkenyl, oxyalkyl, oxyalkenyl, aminoalkyl, aminoalkanyl, alkyl ether, alkenyl ether, and -CY₂-R18, in which each Y is independently selected from H, CH₃, C₂H₅, C₃H₇ and R18 is independently selected from an optionally substituted heteroaryl group selected from pyridinyl, pyrazinyl, pyrazolyl, pyrrolyl, imidazolyl, benzimidazolyl, pyrimidinyl, triazolyl and thiazolyl; and
at least two of R17 are -CY₂-R18).

9. The method of claim 8, wherein the polydentate accelerant ligand is of formula (I).

10. The method of claim 8. wherein the ligand is selected from dimethyl 2.4-di-(2-pyridyl)-3-methyl-7-(pyridin-2-ylmethyl)-3,7-diaza-bicyclo[3.3.1]nonan-9-one-1,5-dicarboxylate, dimethyl 2,4-di-(2-pyridyl)-3-methyl-7-(N,N-dimethyl-amino-ethyl)-3,7-diaza-bicyclo[3.3.1]nonan-9-one-1,5-dicarboxylate, 5,12-dimethyl-1,5,8,12-tetraaza-bicyclo[6.6.2]hexadecane, 5,12-dibenzyl-1,5,8,12-tetraaza-bicyclo[6.6.2]hexadecane, 1,4,8,11-tetraazacyclotetradecane, 1,4,8,11-tetramethyl-1,4,8,11-tetraazacyclatetradecane, 1,4,7,10-tetraazacyclododecane, 1,4,7,10-tetramethyl-1,4,7,10-tetraazacyclododecane, 1,4,7,10-tetrakis(pyridine-2ylmethyl)-1,4,7,10-tetraazacyclododecane, 1,4,7-trimethyl-1,4,7-triazacyclononane, N,N-bis(pyridin-2-yl-methyl)-bis(pyridin-2-yl)methylamine, 1,4,7-trimethyl-1,4,7-triazacyclononane, N,N-bis(pyridin-2-yl-methyl-1,1-bis(pyridin-2-yl)-1-aminoethane, and N,N-bls(pyridin-2-yl-methyl-1,1-bis(pyridin-2-yl)-2-phenyl-1- aminoethane.

11. The method of any one of claims 1 to 10, which further comprises contacting the coating composition with an antiskinning agent.

12. The method of claim 11, wherein the antiskinning agent is selected from methylethylketoxime, acetonoxime, butyraldoxime, dialkylhydroxylamine, ammonia, hydroxylamine, triethylamine, dimethylethanolamine, o-cyclohexylphenol, p-cyclohexylphenol and 2-t-butyl-4-methylphenol.

13. A coating composition obtainable by a method as defined in any one of claims 1 to 12.

14. The coating composition of claim 12, which comprises from about 0.01 to about 1 wt% of water, based on the weight of the oxidatively curable coating.

15. Use of an aqueous solution comprising a complex of a transition metal ion and a polydentate accelerant ligand to reduce skinning of an oxidatively curable solvent-based coating composition.
